# EUROPEAN PATENT APPLICATION

(11) **EP 4 810 843 A1**
(43) Date of publication of application: **23.09.2026**
(21) Application number: 24891009.3
(22) Date of filing: 10.07.2024
(51) Int. Cl.: F16L 15/06, F16L 15/04

(54) **THREADED JOINT FOR STEEL PIPE**

(30) Priority: 14.11.2023 JP 2023194016
(71) Applicant: Nippon Steel Corporation, Tokyo 100-8071 (JP); Vallourec Oil and Gas France, 59620 Aulnoye-Aymeries (FR)
(72) Inventor: DOUCHI, Sadao, Tokyo 100-8071 (JP); YAMAMOTO, Tatsuya, Tokyo 100-8071 (JP); SUGINO, Masaaki, Tokyo 100-8071 (JP); DELBOSCO, Thimothe, 92190 Meudon (FR); MARTIN, Pierre, 92190 Meudon (FR); MENCAGLIA, Xavier, 92190 Meudon (FR)
(74) Representative: J A Kemp LLP
(86) International application number: PCT/JP2024/024899
(87) International publication number: WO 2025/104964

(57) **Abstract**

A threaded connection (100) includes a pin (10) and a box (20). The pin (10) has a pin inner sealing surface (11) and a male thread part (12). The male thread part (12) includes an inner male thread part (121) and an outer male thread part (122). The box (20) has a box inner sealing surface (21) and a female thread part (22). The female thread part (22) includes an inner female thread part (221) and an outer female thread part (222). A gap (G) of 0.2 mm or more is formed between a crest (123) of the male thread part (12) and a root (224) of the female thread part (22) and/or between a root (124) of the male thread part (12) and a crest (223) of the female thread part (22). The threaded connection (100) satisfies a condition that L/t ≥ 1.0 or a condition that D ≥ 11.0 [mm]. L represents the length of a completely engaging region (40), t represents the wall thickness of the pipe body, and D represents the distance from a contact position (P1) between the inner sealing surfaces (11, 21) to the inner male thread part (121).

## Description

### TECHNICAL FIELD

The present disclosure relates to a threaded connection for steel pipes, and more particularly relates to an integral type threaded connection that connects steel pipes together.

### BACKGROUND ART

In oil wells, natural gas wells and the like, a large number of steel pipes which are called "oil country tubular goods" are used for extracting underground resources. The pipes are connected to each other by threaded connections.

Threaded connections for steel pipes are generally classified into two types: integral type threaded connections and coupling type threaded connections. In the case of an integral type threaded connection, each pipe has a male thread part at one end part and a female thread part at the other end part. Two pipes are connected together by the male thread part of one of the pipes being screwed into the female thread part of the other pipe to thereby fasten the pipes to each other. In the case of a coupling type threaded connection, pipes that have a male thread part at both end parts are connected to each other using a coupling. The coupling is a separate tubular member from the pipes that are the objects to be connected, and has a female thread part at both end parts thereof. The male thread parts of the pipes are screwed into the respective female thread parts of the coupling to thereby fasten the pipes to the coupling. In general, an end part of a steel pipe having a male thread part is called a "pin", and an end part of a steel pipe or a coupling having a female thread part is called a "box".

A threaded connection to be used in an oil well or the like is required to have excellent sealing performance against a pressure fluid from the inside (internal pressure) and a pressure fluid from the outside (external pressure). A threaded connection is known in which the pin and the box are each provided with a sealing surface in order to secure the sealing performance. The diameter of the sealing surface of the pin is slightly larger than the diameter of the sealing surface of the box. The difference between the diameter of the sealing surface of the pin and the diameter of the sealing surface of the box is referred to as an "interference amount". The interference amount causes a contact pressure to arise between the sealing surface of the pin and the sealing surface of the box when the threaded connection is made-up, thereby exhibiting sealing performance.

In Patent Literature 1, in relation to a very heavy-walled threaded connection in which the wall thickness of the pipe body is 18 mm or more, it is described to the effect that while on the one hand high contact pressure is required at a seal portion to secure sealing performance under a combined load of a high compressive load and a high external pressure, on the other hand there is a concern that galling will occur if the contact pressure is too high. Patent Literature 1 proposes making the wall thickness of the pin at a seal point equal to or greater than 0.045 times the outer diameter of the pipe body in order to secure sealing performance for a very heavy-walled threaded connection, particularly under high external pressure. The term "seal point" refers to a point at which the interference amount between an inner sealing surface provided at a front end part of the pin and an inner sealing surface of the box corresponding thereto becomes the maximum amount. Further, to prevent the occurrence of galling, Patent Literature 1 proposes making a perfect thread length of the male thread part of the pin not more than a multiple of 4.0 times the wall thickness of the pipe body. In the very heavy-walled threaded connection disclosed in Patent Literature 1, a male thread part and a female thread part are constituted by a trapezoidal thread in which the angle of a stabbing flank is positive and the angle of a load flank is negative.

Patent Literature 2 proposes, in relation to a threaded connection in which a male thread part and a female thread part are each constituted by a trapezoidal thread, sharing a compressive load to the thread parts by causing stabbing flanks of the male thread part and female thread part to contact against each other and causing load flanks of the male thread part and female thread part to contact against each other during the course of making-up and when making-up is completed. According to Patent Literature 2, as a result of the thread parts sharing a compressive load, an excessive load is not applied to shoulder parts of the pin and the box that butt against each other in a made-up state, and therefore deformation of the shoulder parts as well as a decline in sealing performance that is caused by deformation of the shoulder parts can be prevented. According to Patent Literature 2, it is anticipated that the pin and box will loosen under a high compressive load in the made-up state, and a completely engaging length between the male thread part and the female thread part is set. The completely engaging length is set so as to be a multiple of three times or more, four times or more or five times or more the wall thickness of the pipe body, depending on the ratio between the wall thickness and outer diameter of the pipe body.

### CITATION LIST

### PATENT LITERATURE

Patent Literature 1: Japanese Patent Application Publication No. 2015-132285
Patent Literature 2: Japanese Patent Application Publication No. 2000-081173

### SUMMARY OF INVENTION

### TECHNICAL PROBLEM

Prior to making-up, a lubricant referred to as "dope" is in some cases applied to the pin and/or the box. The dope prevents the occurrence of galling during making-up. However, for example, in a case where the amount of dope applied to the pin and/or the box is excessive, a situation may occur in which the dope is shut into the threaded connection and enters a high pressure state. When the charged pressure of the dope increases, the contact pressure at the seal portion constituted by the sealing surface of the pin and the sealing surface of the box decreases, and the sealing performance of the threaded connection declines.

An objective of the present disclosure is to provide a threaded connection for steel pipes that can reduce the charged pressure of dope and obtain excellent sealing performance.

### SOLUTION TO PROBLEM

A threaded connection according to the present disclosure is an integral type threaded connection that connects steel pipes together. The threaded connection includes a tubular pin and a tubular box. The pin is provided to be adjacent to a pipe body in one of the steel pipes to be connected. The box is provided in the other of the steel pipes to be connected, and is made-up with the pin. The pin has, on an outer peripheral surface, a pin inner sealing surface, a male thread part and a pin intermediate sealing surface. The male thread part is disposed on the pipe body side with respect to the pin inner sealing surface. The male thread part includes an inner male thread part and an outer male thread part. The inner male thread part and the outer male thread part are each constituted by a tapered thread having a dovetail-shaped cross section. The outer male thread part is disposed on the pipe body side with respect to the inner male thread part. The pin intermediate sealing surface is disposed between the inner male thread part and the outer male thread part. The box has, on an inner peripheral surface, a box inner sealing surface, a female thread part and a box intermediate sealing surface. The box inner sealing surface corresponds to the pin inner sealing surface, and contacts the pin inner sealing surface in a made-up state of the pin and the box. The female thread part corresponds to the male thread part. The female thread part includes an inner female thread part and an outer female thread part. The inner female thread part and the outer female thread part are each constituted by a tapered thread having a dovetail-shaped cross section. The inner female thread part engages with the inner male thread part. The outer female thread part engages with the outer male thread part. The box intermediate sealing surface corresponds to the pin intermediate sealing surface, and contacts the pin intermediate sealing surface in the made-up state. In the made-up state, a gap of 0.2 mm or more is formed at least one of: between a crest of the male thread part and a root of the female thread part; and between a root of the male thread part and a crest of the female thread part. The threaded connection is constituted so as to satisfy the following condition (1) or (2).
(1) L/t ≥ 1.0, where a length of a completely engaging region in an axial direction of the threaded connection is represented by "L", and a wall thickness of the pipe body is represented by "t". The term "completely engaging region" refers to a region in which a perfect thread part of the inner male thread part and a perfect thread part of the inner female thread part engage together.
(2) A distance D in the axial direction from a contact position of the pin inner sealing surface with respect to the box inner sealing surface to the inner male thread part is not more than 11.0 mm.

### ADVANTAGEOUS EFFECTS OF INVENTION

According to the threaded connection for steel pipes of the present disclosure, the charged pressure of dope can be reduced and excellent sealing performance can be obtained.

### BRIEF DESCRIPTION OF DRAWINGS

[FIG. 1] FIG. 1 is a longitudinal sectional view of a threaded connection for steel pipes according to the respective embodiments.
[FIG. 2] FIG. 2 is an enlarged view of thread parts of the threaded connection illustrated in FIG. 1.
[FIG. 3] FIG. 3 is a partially enlarged view of a longitudinal cross section of a threaded connection according to a first embodiment.
[FIG. 4] FIG. 4 is a partially enlarged view of a longitudinal cross section of a threaded connection according to a second embodiment.

### DESCRIPTION OF EMBODIMENTS

If the pressure of dope shut into a threaded connection becomes high, the pin is pushed toward the inner circumference side and the box is pushed toward the outer circumference side, and therefore the contact pressure at the seal portion decreases and the sealing performance declines. In a case where the seal portion is provided at the front end side of the pin, internal pressure passes through the seal portion and penetrates into the threaded connection. As a result of studies conducted by the present inventors, it has been found that although dope within the threaded connection is thrust toward the pipe body side by the internal pressure, when thread parts are divided into two steps, jamming of dope is liable to occur on the pipe body side. In this case, the internal pressure that penetrated into the threaded connection stays at an intermediate portion of the thread parts, and induces expansion deformation of the box.

In a threaded connection in which the cross-sectional shape of the threads is a dovetail shape, high torque resistance performance is exhibited as a result of the stabbing flanks of the male thread part and the female thread part tightly contacting each other and also the load flanks of the male thread part and the female thread part tightly contacting each other when making-up is completed. In the threaded connection, in a made-up state, no gap is present between the crest and the root, or if a gap is present, the gap is an extremely small gap of 0.1 mm or less. Therefore, the charged pressure of the dope is particularly liable to become high, and a decrease in the sealing performance as well as expansion deformation of the box are likely to occur. Therefore, with respect to a threaded connection in which thread parts are divided into two steps and in which the cross-sectional shape of the thread parts is a dovetail shape, the present inventors attempted to enlarge the gap between the crest and the root to 0.2 mm or more to thereby reduce the charged pressure of dope.

When a larger gap was provided between the crest and the root, a problem arose whereby the contact position between an inner sealing surface provided on the front end side of the pin and an inner sealing surface of the box corresponding thereto moved. It is considered that this is because, when the gap between the crest and the root increases, it becomes difficult for the crest and the root to be supported by each other. That is, in a case where the crest and the root are not supported by each other, the front end part of the pin is liable to undergo diameter-reducing deformation, and the movement amount of the inner sealing surface of the pin increases accompanying the diameter-reducing deformation. Therefore, a contact position at which the inner sealing surfaces of the pin and box contact each other changes significantly, and the sealing performance of the threaded connection decreases. As a result of conducting further intensive studies to deal with this problem, the present inventors completed the threaded connection for steel pipes according to the embodiments.

A threaded connection according to an embodiment is an integral type threaded connection that connects steel pipes together. The threaded connection includes a tubular pin and a tubular box. The pin is provided to be adjacent to a pipe body in one of the steel pipes to be connected. The box is provided in the other of the steel pipes to be connected, and is made-up with the pin. The pin has, on an outer peripheral surface, a pin inner sealing surface, a male thread part and a pin intermediate sealing surface. The male thread part is disposed on the pipe body side with respect to the pin inner sealing surface. The male thread part includes an inner male thread part and an outer male thread part. The inner male thread part and the outer male thread part are each constituted by a tapered thread having a dovetail-shaped cross section. The outer male thread part is disposed on the pipe body side with respect to the inner male thread part. The pin intermediate sealing surface is disposed between the inner male thread part and the outer male thread part. The box has, on an inner peripheral surface, a box inner sealing surface, a female thread part and a box intermediate sealing surface. The box inner sealing surface corresponds to the pin inner sealing surface, and contacts the pin inner sealing surface in a made-up state of the pin and box. The female thread part corresponds to the male thread part. The female thread part includes an inner female thread part and an outer female thread part. The inner female thread part and the outer female thread part are each constituted by a tapered thread having a dovetail-shaped cross section. The inner female thread part engages with the inner male thread part. The outer female thread part engages with the outer male thread part. The box intermediate sealing surface corresponds to the pin intermediate sealing surface, and contacts the pin intermediate sealing surface in the made-up state. In the made-up state, a gap of 0.2 mm or more is formed between at least one of the crest of the male thread part and the root of the female thread part, and the root of the male thread part and the crest of the female thread part. The threaded connection is constituted so as to satisfy condition (1) or (2) hereunder.
(1) L/t ≥ 1.0, where a length of a completely engaging region in an axial direction of the threaded connection is represented by "L", and a wall thickness of the pipe body is represented by "t". The term "completely engaging region" refers to a region in which a perfect thread part of the inner male thread part and a perfect thread part of the inner female thread part engage together.
(2) A distance D in the axial direction from a contact position of the pin inner sealing surface with respect to the box inner sealing surface to the inner male thread part is not more than 11.0 mm.

In the threaded connection according to the embodiment, a gap of 0.2 mm or more is provided between a crest and a root. By this means, it is difficult for dope to become jammed between the male thread part and the female thread part, and dope is easily discharged from inside the threaded connection. Therefore, the charged pressure of the dope inside the threaded connection can be reduced.

Further, the threaded connection according to the embodiment is constructed so that a length L of a completely engaging region in which a perfect thread part of the inner male thread part and a perfect thread part of the inner female thread part engage together is equal to or greater than a wall thickness t of the pipe body, or so that a distance D to the inner male thread part from a contact position of the pin inner sealing surface with respect to the box inner sealing surface is not more than 11.0 mm. In a case where L/t ≥ 1.0, with respect to the wall thickness t of the pipe body, a length L of a completely engaging region in which a perfect thread part of the inner male thread part and a perfect thread part of the inner female thread part overlap is sufficiently secured, and the rigidity of an inner thread part increases. In a case where D ≤ 11.0 [mm], in the pin, a portion between the pin inner sealing surface and the inner male thread part is comparatively short, and the rigidity of the portion is enhanced. Hence, if the condition that L/t ≥ 1.0 or the condition that D ≤ 11.0 [mm] is satisfied, even if a gap of 0.2 mm or more exists between the crest and the root, diameter-reducing deformation of the front end part of the pin can be inhibited. Therefore, it is difficult for a change to arise in the contact position of the pin inner sealing surface with respect to the box inner sealing surface, and excellent sealing performance can be obtained.

The aforementioned gap is preferably formed between the crest of the male thread part and the root of the female thread part.

In the made-up state, preferably a front end face of the pin faces the box with a space therebetween.

Embodiments of the present disclosure are described hereunder while referring to the accompanying drawings. In the drawings, the same reference symbols are assigned to the same or equivalent parts, and a description thereof is not repeated.

### [First Embodiment]

### (Overall configuration of threaded connection)

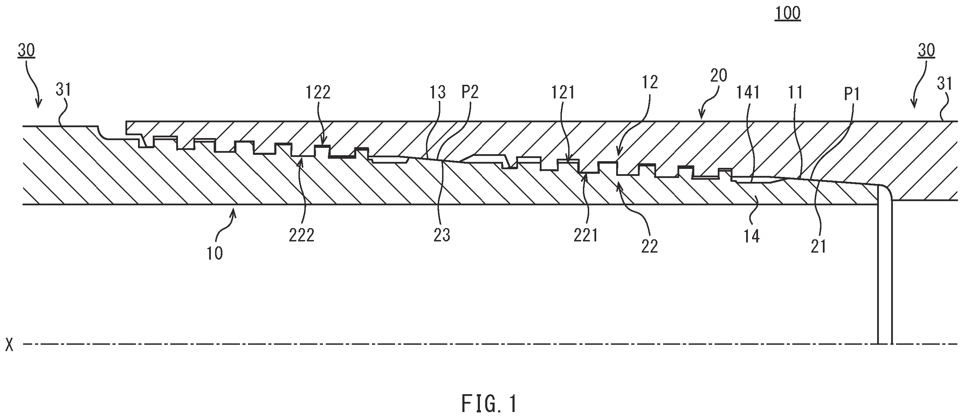

FIG. 1 is a longitudinal sectional view of a threaded connection 100 for steel pipes according to an embodiment. The term "longitudinal section" of the threaded connection 100 refers to a cross-section obtained when the threaded connection 100 is cut along a plane that includes a central axis X. Hereunder, the direction in which the central axis X extends is referred to as an "axial direction", and the radial direction of the threaded connection 100 is referred to as simply a "radial direction".

The threaded connection 100 connects steel pipes 30 together. The threaded connection 100 includes a tubular pin 10 and a tubular box 20. The pin 10 is provided at one end part of each steel pipe 30, and the box 20 is provided at the other end part of each steel pipe 30. That is, the threaded connection 100 is an integral type threaded connection.

The pin 10 is inserted into the box 20, and is made-up with the box 20. Prior to making-up, a lubricant that is referred to as "dope" is applied to the outer peripheral surface of the pin 10 and/or the inner peripheral surface of the box 20. The dope is a compound grease that is used for making-up threaded connections. Available kinds of dope include, for example, a compound grease containing a heavy metal that is specified in Bulletin 5A2 of the API (American Petroleum Institute), and a compound grease (so-called "yellow dope") that contains solid constituents that is more environmentally friendly than a compound grease containing a heavy metal.

Referring to FIG. 1, the pin 10 is provided to be adjacent to a pipe body 31 in one of the steel pipes 30 to be connected. The pin 10 has, on an outer peripheral surface, a pin inner sealing surface 11, a male thread part 12, and a pin intermediate sealing surface 13.

The pin inner sealing surface 11 is provided at a front end part of the pin 10. The shape of the pin inner sealing surface 11 is not particularly limited. The pin inner sealing surface 11, for example, as seen in a longitudinal sectional view of the threaded connection 100, may be a curve that is convex to the box 20 side, or may be a straight line that inclines relative to the central axis X so as to approach the central axis X progressively toward the front end side of the pin 10. The pin inner sealing surface 11 may also be composed of a combination of two or more kinds of curves and/or straight lines.

The male thread part 12 is disposed on the pipe body 31 side with respect to the pin inner sealing surface 11. In the pin 10, a portion between the male thread part 12 and the pin inner sealing surface 11 is referred to as a "neck part 14". A concave portion 141 is formed in the outer peripheral surface of the neck part 14. The male thread part 12 includes an inner male thread part 121 and an outer male thread part 122. The outer male thread part 122 is disposed on the pipe body 31 side with respect to the inner male thread part 121.

The inner male thread part 121 and the outer male thread part 122 are each constituted by a tapered thread having a dovetail-shaped cross section. The width of the ridge of the inner male thread part 121 decreases progressively toward the front end side of the pin 10. The width of the groove of the inner male thread part 121 increases progressively toward the front end side of the pin 10. The width of the ridge of the outer male thread part 122 decreases progressively toward the inner male thread part 121 side. The width of the groove of the outer male thread part 122 increases progressively toward the inner male thread part 121 side.

The pin intermediate sealing surface 13 is disposed between the inner male thread part 121 and the outer male thread part 122. That is, the inner male thread part 121, the pin intermediate sealing surface 13 and the outer male thread part 122 are disposed side-by-side in this order from the front end side of the pin 10 toward the pipe body 31 side. The shape of the pin intermediate sealing surface 13 is not particularly limited. The pin intermediate sealing surface 13, for example, as seen in a longitudinal sectional view of the threaded connection 100, may be a curve that is convex to the box 20 side, or may be a straight line that inclines relative to the central axis X so as to approach the central axis X progressively toward the inner male thread part 121 side. The pin intermediate sealing surface 13 may also be composed of a combination of two or more kinds of curves and/or straight lines.

The box 20 is provided to be adjacent to the pipe body 31 in the other of the steel pipes 30 to be connected. The box 20 has, on an inner peripheral surface, a box inner sealing surface 21, a female thread part 22 and a box intermediate sealing surface 23. The box inner sealing surface 21, the female thread part 22 and the box intermediate sealing surface 23 are provided in the box 20 in correspondence with the pin inner sealing surface 11, the male thread part 12 and the pin intermediate sealing surface 13, respectively.

The box inner sealing surface 21 is provided at an interior end part of the box 20. The box inner sealing surface 21 contacts the pin inner sealing surface 11 when the pin 10 and the box 20 are in a made-up state, and together with the pin inner sealing surface 11 constitutes an inner seal portion by metal-to-metal contact. At such time, the front end face of the pin 10 faces the box 20 with a space therebetween. That is, there is no so-called "shoulder surface" in the pin 10 and the box 20.

In an unmade-up state, the diameter of the pin inner sealing surface 11 is slightly larger than the diameter of the box inner sealing surface 21. That is, there is an interference amount between the pin inner sealing surface 11 and the box inner sealing surface 21 in the radial direction. When the pin 10 and the box 20 are made-up and the pin inner sealing surface 11 and the box inner sealing surface 21 come into interference contact with each other, the pin inner sealing surface 11 decreases in diameter and the box inner sealing surface 21 increases in diameter. Because of an elastic resilient force that arises at the pin inner sealing surface 11 that decreased in diameter and the box inner sealing surface 21 that increased in diameter, high contact pressure arises between the pin inner sealing surface 11 and the box inner sealing surface 21.

The contact pressure between the pin inner sealing surface 11 and the box inner sealing surface 21 is designed to be greatest at a contact position P1. The contact position P1, in a made-up and non-loaded state, is a position at which a difference (interference amount) between the diameter of the pin inner sealing surface 11 and the diameter of the box inner sealing surface 21 is greatest when a drawing of the pin 10 and a drawing of the box 20 in an unmade-up state are superposed in alignment with the making-up completion position.

Similarly to the pin inner sealing surface 11, the shape of the box inner sealing surface 21 is not particularly limited. The box inner sealing surface 21, may be, as seen in a longitudinal sectional view of the threaded connection 100, a straight line that inclines relative to the central axis X so as to approach the pin 10 progressively toward the interior side of the box 20, or may be a curve that is convex to the pin 10 side. The box inner sealing surface 21 may also be composed of a combination of two or more kinds of straight lines and/or curves.

The female thread part 22 is disposed on the outer side with respect to the box inner sealing surface 21 in the box 20. The female thread part 22 includes an inner female thread part 221 and an outer female thread part 222. The inner female thread part 221 and the outer female thread part 222 are each constituted by a tapered thread having a dovetail-shaped cross section.

The inner female thread part 221 corresponds to the inner male thread part 121 of the pin 10, and engages with the inner male thread part 121. The width of the ridge of the inner female thread part 221 increases progressively toward the interior side of the box 20 in correspondence with the width of the groove of the inner male thread part 121. The width of the groove of the inner female thread part 221 decreases progressively toward the interior side of the box 20 in correspondence with the width of the ridge of the inner male thread part 121.

The outer female thread part 222 is disposed on the outer side with respect to the inner female thread part 221 in the box 20. The outer female thread part 222 corresponds to the outer male thread part 122 of the pin 10, and engages with the outer male thread part 122. The width of the ridge of the outer female thread part 222 increases progressively toward the inner female thread part 221 side in correspondence with the width of the groove of the outer male thread part 122. The width of the groove of the outer female thread part 222 decreases progressively toward the inner female thread part 221 side in correspondence with the width of the ridge of the outer male thread part 122.

The box intermediate sealing surface 23 is disposed between the inner female thread part 221 and the outer female thread part 222. The box intermediate sealing surface 23 contacts the pin intermediate sealing surface 13 when the pin 10 and the box 20 are in a made-up state, and together with the pin intermediate sealing surface 13 constitutes an intermediate seal portion by metal-to-metal contact. In an unmade-up state, the diameter of the pin intermediate sealing surface 13 is slightly larger than the diameter of the box intermediate sealing surface 23. That is, there is an interference amount between the pin intermediate sealing surface 13 and the box intermediate sealing surface 23 in the radial direction. When the pin 10 and the box 20 are made-up and the pin intermediate sealing surface 13 and the box intermediate sealing surface 23 come into interference contact with each other, the pin intermediate sealing surface 13 decreases in diameter and the box intermediate sealing surface 23 increases in diameter. Because of an elastic resilient force that arises at the pin intermediate sealing surface 13 and the box intermediate sealing surface 23, high contact pressure arises between the pin intermediate sealing surface 13 and the box intermediate sealing surface 23.

The contact pressure between the pin intermediate sealing surface 13 and the box intermediate sealing surface 23 is designed to be greatest at a contact position P2. The contact position P2 is a position at which a difference (interference amount) between the diameter of the pin intermediate sealing surface 13 and the diameter of the box intermediate sealing surface 23 is greatest when a drawing of the pin 10 and a drawing of the box 20 in an unmade-up state are superposed in alignment with the making-up completion position.

Similarly to the pin intermediate sealing surface 13, the shape of the box intermediate sealing surface 23 is not particularly limited. The box intermediate sealing surface 23, may be, as seen in a longitudinal sectional view of the threaded connection 100, a straight line that inclines relative to the central axis X so as to approach the pin 10 progressively toward the inner female thread part 221 side, or may be a curve that is convex to the pin 10 side. The box intermediate sealing surface 23 may also be composed of a combination of two or more kinds of straight lines and/or curves.

### (Structure of thread parts)

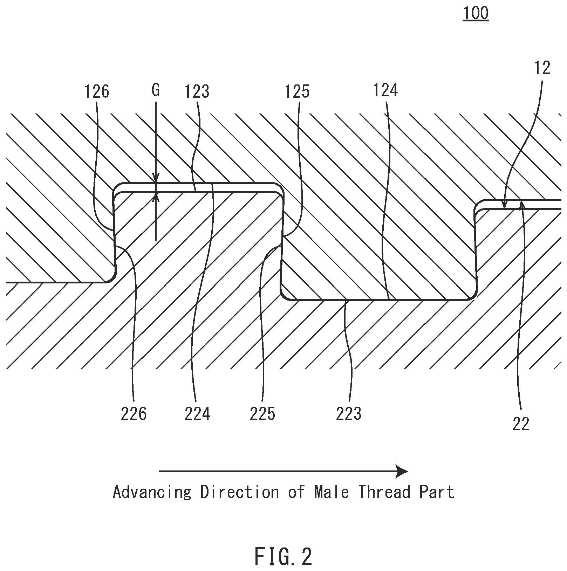

Hereunder, the thread shapes of the male thread part 12 and the female thread part 22 are described while referring to FIG. 2. FIG. 2 is an enlarged view of the male thread part 12 and the female thread part 22. In the present embodiment, there is no substantial difference between the perfect thread shapes of the inner male thread part 121 and the inner female thread part 221 and the perfect thread shapes of the outer male thread part 122 and the outer female thread part 222. Therefore, here, the thread shapes of the male thread part 12 and the female thread part 22 are described without particularly differentiating between the thread shapes.

Referring to FIG. 2, the male thread part 12 has a crest 123, a root 124, a stabbing flank 125 and a load flank 126. As seen in a longitudinal sectional view of the threaded connection 100, the crest 123, the root 124, the stabbing flank 125 and the load flank 126 each have a linear shape.

In the present embodiment, as seen in a longitudinal sectional view of the threaded connection 100, the crest 123 and the root 124 are substantially parallel to the central axis X (FIG. 1). The crest 123 and the root 124 are connected by the stabbing flank 125 and the load flank 126.

The stabbing flank 125 is positioned forward of the crest 123 in the direction in which the male thread part 12 advances with respect to the female thread part 22. As seen in a longitudinal sectional view of the threaded connection 100, the stabbing flank 125 is connected through arcs to the crest 123 and the root 124. As seen in a longitudinal sectional view of the threaded connection 100, the stabbing flank 125 is inclined so that the end thereof on the crest 123 side is located further forward in the advancing direction of the male thread part 12 than the end thereof on the root 124 side.

The load flank 126 is disposed rearward of the crest 123 in the advancing direction of the male thread part 12. As seen in a longitudinal sectional view of the threaded connection 100, the load flank 126 is connected through arcs to the crest 123 and the root 124. As seen in a longitudinal sectional view of the threaded connection 100, the load flank 126 is inclined so that the end thereof on the crest 123 side is located further rearward in the advancing direction of the male thread part 12 than the end thereof on the root 124 side. That is, the load flank 126 is inclined to the opposite side compared to the stabbing flank 125.

The female thread part 22 has a crest 223, a root 224, a stabbing flank 225 and a load flank 226. As seen in a longitudinal sectional view of the threaded connection 100, the crest 223, the root 224, the stabbing flank 225 and the load flank 226 each have a linear shape.

Similarly to the crest 123 and the root 124 of the male thread part 12, the crest 223 and the root 224 are substantially parallel to the central axis X (FIG. 1) as seen in a longitudinal sectional view of the threaded connection 100. The crest 223 and the root 224 are connected by the stabbing flank 225 and the load flank 226.

The stabbing flank 225 is disposed in correspondence with the stabbing flank 125 of the male thread part 12. As seen in a longitudinal sectional view of the threaded connection 100, the stabbing flank 225 is connected through arcs to the crest 223 and the root 224. As seen in a longitudinal sectional view of the threaded connection 100, the stabbing flank 225 is inclined so that the end thereof on the crest 223 side is located further rearward in the advancing direction of the male thread part 12 than the end thereof on the root 224 side.

The load flank 226 is disposed in correspondence with the load flank 126 of the male thread part 12. As seen in a longitudinal sectional view of the threaded connection 100, the load flank 226 is connected through arcs to the crest 223 and the root 224. As seen in a longitudinal sectional view of the threaded connection 100, the load flank 226 is inclined so that the end thereof on the crest 223 side is located further forward in the advancing direction of the male thread part 12 than the end thereof on the root 224 side. That is, the load flank 226 is inclined to the opposite side compared to the stabbing flank 225.

In the made-up state, the stabbing flank 125 of the male thread part 12 and the stabbing flank 225 of the female thread part 22 contact, and the load flank 126 of the male thread part 12 and the load flank 226 of the female thread part 22 contact. When making-up is completed, the stabbing flanks 125 and 225 tightly contact each other, and the load flanks 126 and 226 tightly contact each other. The root 124 of the male thread part 12 and the crest 223 of the female thread part 22 may contact in the made-up state or need not contact in the made-up state. In the made-up state, a gap G is formed between the crest 123 of the male thread part 12 and the root 224 of the female thread part 22.

The size of the gap G is 0.2 mm or more. That is, a distance in the radial direction from the crest 123 to the root 224 is 0.2 mm or more. The size of the gap G is preferably 0.3 mm or more. Although not particularly limited, the size of the gap G is, for example, not more than 1.0 mm.

Instead of providing the gap G between the crest 123 of the male thread part 12 and the root 224 of the female thread part 22 in the made-up state, the gap G in the made-up state can be provided between the root 124 of the male thread part 12 and the crest 223 of the female thread part 22. Alternatively, in the made-up state, the gap G may be provided both between the crest 123 of the male thread part 12 and the root 224 of the female thread part 22, and between the root 124 of the male thread part 12 and the crest 223 of the female thread part 22.

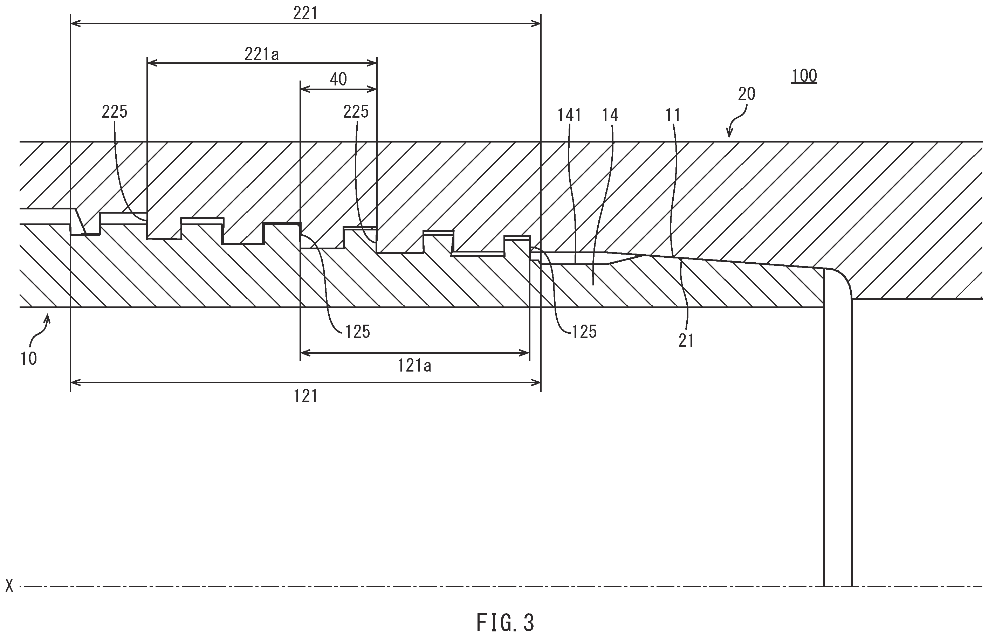

FIG. 3 is a partially enlarged view of the threaded connection 100 illustrated in FIG. 1. Referring to FIG. 3, the inner male thread part 121 includes a perfect thread part 121a. The inner female thread part 221 includes a perfect thread part 221a.

The term "perfect thread part" refers to a thread part having a ridge with a complete height, and the term "imperfect thread part" refers to a thread part in which the top of the ridge is shaved off when performing thread machining and at which the height of the ridge is lower than the height of the ridge in the perfect thread part. In the present embodiment, as seen in a longitudinal sectional view of the threaded connection 100, among the ridges with a complete height included in the inner male thread part 121, an area from the stabbing flank 125 of the ridge closest to the pin inner sealing surface 11 to the stabbing flank 125 of the ridge closest to the pin intermediate sealing surface 13 (FIG. 1) is defined as the perfect thread part 121a. Although not particularly limited, the length of the inner male thread part 121 in the axial direction is, for example, a multiple of three to eight times the wall thickness t of the pipe body 31 (FIG. 1). With respect thereto, the length of the perfect thread part 121a in the axial direction, for example, is made to fall within a range of 20 to 95% of the length of the inner male thread part 121.

The perfect thread part 221a of the inner female thread part 221 can be defined in a similar manner to the perfect thread part 121a of the inner male thread part 121. That is, as seen in a longitudinal sectional view of the threaded connection 100, among the ridges with a complete height included in the inner female thread part 221, an area from the stabbing flank 225 of the ridge closest to the box inner sealing surface 21 to the stabbing flank 225 of the ridge closest to the box intermediate sealing surface 23 (FIG. 1) is defined as the perfect thread part 221a. Since the inner female thread part 221 is provided in the box 20 in correspondence with the inner male thread part 121 of the pin 10, the length in the axial direction of the inner female thread part 221 and the length in the axial direction of the inner male thread part 121 are substantially equal. With respect thereto, the length of the perfect thread part 221a in the axial direction, for example, is made to fall within a range of 20 to 95% of the length of the inner female thread part 221.

In a made-up state, the perfect thread part 221a of the inner female thread part 221 and the perfect thread part 121a of the inner male thread part 121 partially overlap. That is, a part of the perfect thread part 221a of the inner female thread part 221 engages with a part of the perfect thread part 121a of the inner male thread part 121. A region in which the perfect thread parts 121a and 221a engage is referred to as a "completely engaging region 40".

A length L of the completely engaging region 40 in the axial direction is set to be equal to or greater than 1.0 times the wall thickness t of the pipe body 31 (FIG. 1) (L/t ≥ 1.0). The length L of the completely engaging region 40 and the wall thickness t of the pipe body 31 may satisfy preferably L/t ≥ 1.2, more preferably L/t ≥ 1.4. When the length L is excessively large, it may be hard to maintain the intermediate sealing surfaces 13 and 23 and the outer thread parts 122 and 222. Therefore, the length L of the completely engaging region 40 and the wall thickness t of the pipe body 31 may satisfy preferably L/t ≤ 3.0, more preferably L/t ≤ 2.4.

### (Advantageous Effects)

In the threaded connection 100 according to the present embodiment, in a made-up state the gap G of 0.2 mm or more is formed between the crest 123 of the male thread part 12 and the root 224 of the female thread part 22. Therefore, when performing making-up, dope applied to the pin 10 and/or the box 20 is discharged to the outside of the threaded connection 100 through the gap G without becoming jammed between the male thread part 12 and the female thread part 22. Hence, the charged pressure of dope inside the threaded connection 100 can be reduced.

In the present embodiment, the thread parts 12 and 22 are divided into the inner thread parts 121 and 221 and the outer thread parts 122 and 222 with the intermediate sealing surfaces 13 and 23 sandwiched therebetween. Therefore, it is difficult to lengthen the perfect thread parts 121a and 221a. Furthermore, in a case where the wall thickness t of the pipe body 31 is 10 mm or less, it becomes more difficult to secure the lengths of the perfect thread parts 121a and 221a due to design constraints. Therefore, in the present embodiment, instead of the individual lengths of the perfect thread parts 121a and 221a, the length L of the completely engaging region 40 in which the perfect thread parts 121a and 221a overlap is adjusted. That is, in the threaded connection 100 according to the present embodiment, the length L of the completely engaging region 40 at which the perfect thread part 121a of the inner male thread part 121 and the perfect thread part 221a of the inner female thread part 221 engage is equal to or greater than 1.0 times the wall thickness t of the pipe body 31 (L/t ≥ 1.0). By this means, the length L of the completely engaging region 40 that is in accordance with the wall thickness t of the pipe body 31 is secured, and the rigidity of the inner male thread part 121 and the inner female thread part 221 in a made-up state increases. Therefore, diameter-reducing deformation of the front end part of the pin 10 is inhibited, and it is difficult for changes to occur in the contact position P1 of the pin inner sealing surface 11 with respect to the box inner sealing surface 21. Hence, excellent sealing performance can be obtained with respect to internal pressure in particular.

In the case of an integral type threaded connection, the joint efficiency (tensile strength of joint portion/tensile strength of pipe body) is small compared to a coupling type threaded connection. For example, the joint efficiency of an integral type threaded connection is in the range of 50 to 70% relative to a joint efficiency of 100% for a coupling type threaded connection. Therefore, in the case of an integral type threaded connection, the maximum value of a tensile load that is applied is lower in comparison to a coupling type threaded connection.

The threaded connection 100 according to the present embodiment is an integral type threaded connection for which the maximum value of a tensile load that is applied is comparatively small. Therefore, even if the ratio (L/t) of the length L of the completely engaging region 40 of the inner thread parts 121 and 221 to the wall thickness t of the pipe body 31 is reduced to a certain extent, the occurrence of a situation in which female threads and male threads inadvertently disengage from each other (jump-out) can be inhibited.

Further, in general, in an integral type threaded connection, it is difficult to realize a thin-wall design due to constraints relating to the inner diameter and outer diameter. In the case of a threaded connection having an inner thread part and an outer thread part that sandwich an intermediate seal portion (a so-called "two-step threaded connection"), it is even more difficult to realize a thin-wall design, and a situation where L/t < 1.0 is liable to occur. However, although the threaded connection 100 according to the present embodiment is a threaded connection of an integral type that is a two-step threaded connection, the threaded connection 100 according to the present embodiment is constructed so that L/t ≥ 1.0. That is, the threaded connection 100 according to the present embodiment is a threaded connection in which the structure is made completely different to a common threaded connection of an integral type that is a two-step threaded connection.

### [Second Embodiment]

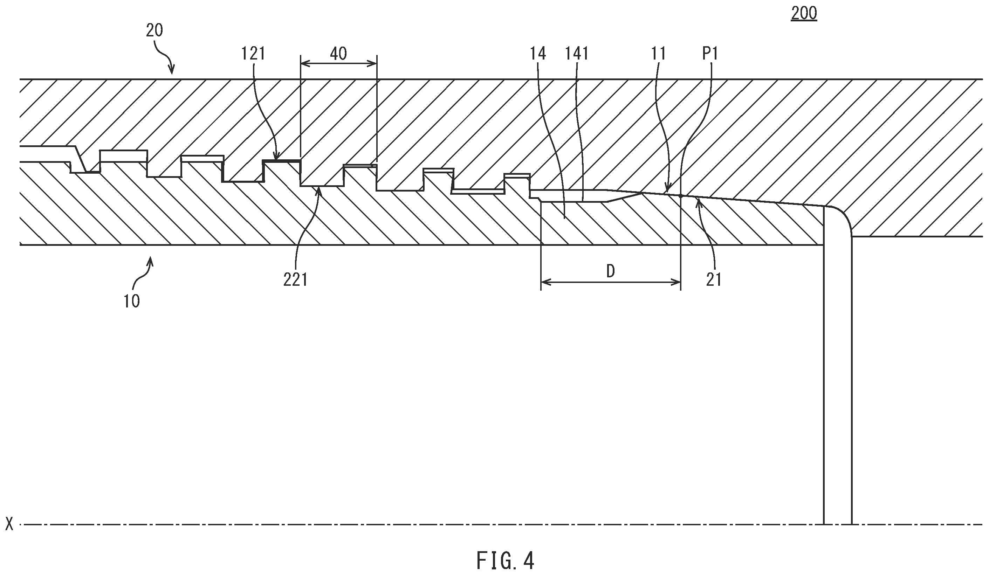

FIG. 4 is a partially enlarged view of a threaded connection 200 according to a second embodiment. Referring to FIG. 4, the threaded connection 200 according to the present embodiment has approximately the same structure as the threaded connection 100 according to the first embodiment. However, in the threaded connection 200, a length L of the completely engaging region 40 is less than 1.0 times the wall thickness t of the pipe body 31 (FIG. 1) (L/t < 1.0).

In the threaded connection 200, a distance D in the axial direction to the inner male thread part 121 from the contact position P1 of the pin inner sealing surface 11 with respect to the box inner sealing surface 21 is set to be not more than 11.0 mm. The distance D is, to more precisely, defined as a distance in the axial direction to the inner male thread part 121 from the contact position P1 in a made-up and non-loaded state. The distance D is preferably not more than 10.5 mm, more preferably not more than 10.0 mm. When the distance D is excessively small, the inner male thread part 121 cannot be machined due to a cutting tool interfering with the pin inner sealing surface 11. Therefore, the distance D may be preferably not less than 8.5 mm, more preferably not less than 9.0 mm. The distance D is the length in the axial direction of the neck part 14. Because of the presence of the concave portion 141 that is formed in the outer peripheral surface, the neck part 14 does not contact the box 20 in a made-up state.

By making the distance D to the inner male thread part 121 from the contact position P1 of the pin inner sealing surface with respect to the box inner sealing surface 21 not more than 11.0 mm (D ≤ 11.0 [mm]), the length in the axial direction of the neck part 14 is shortened and the rigidity of the neck part 14 is enhanced. Therefore, diameter-reducing deformation of the front end part of the pin 10 can be inhibited. Hence, it is difficult for a change in the contact position P1 to occur, and excellent sealing performance can be secured with respect to internal pressure in particular.

Although embodiments relating to the present disclosure have been described above, the present disclosure is not limited to the foregoing embodiments, and various changes are possible within a range that does not deviate from the gist of the present disclosure.

### EXAMPLES

Hereunder, the present disclosure is described in further detail by way of Examples. However, the present disclosure is not limited to the following Examples.

To verify the advantageous effects according to the present disclosure, a sealing performance test was conducted on a plurality of threaded connections in which a ratio (L/t) of the length L of the completely engaging region 40 to the wall thickness t of the pipe body 31, or a distance D from the contact position P1 of the pin inner sealing surface 11 to the inner male thread part 121 were different. Each of the threaded connections had the same basic structure as the threaded connection 100 according to the first embodiment that is described above, and had the gap G of 0.3 mm between the crest 123 of the male thread part 12 and the root 224 of the female thread part 22 in a made-up state. In the sealing performance test, a combined load in conformity with API RP 5C5:2017 and ISO 13679:2019 was applied to each threaded connection in a made-up state, and it was confirmed whether or not a leakage of pressure fluid occurred. The test results are shown in Table 1.

### [Table 1]

**TABLE 1**

| | Pipe Body | | | Inner Thread Part | | | Test Result |
|---|---|---|---|---|---|---|---|
| | Outer Diameter OD [mm] | Wall Thickness t [mm] | t/OD | Completely Engaging Length L[mm] | L/t | Distance D from Contact Position P1 to Male Thread Part [mm] | |
| Example 1 | 127.00 | 9.19 | 0.072 | 12.5 | 1.4 | 12.2 | Pass |
| Example 2 | 177.80 | 10.36 | 0.058 | 16.6 | 1.6 | 12.8 | Pass |
| Example 3 | 193.68 | 12.70 | 0.066 | 30.5 | 2.4 | 14.3 | Pass |
| Example 4 | 127.00 | 7.52 | 0.059 | 0.0 | 0.0 | 10.9 | Pass |
| Comparative Example 1 | 114.30 | 8.56 | 0.075 | 7.3 | 0.9 | 12.1 | Fail |
| Comparative Example 2 | 139.70 | 9.17 | 0.066 | 6.0 | 0.7 | 12.6 | Fail |

As shown in Table 1, in Examples 1 to 3 which satisfied the condition L/t ≥ 1.0, leakage of pressure fluid did not occur, and the test was passed. Further, even in Example 4 in which although L/t < 1.0, the condition that D ≤ 11.0 [mm] was satisfied, leakage of pressure fluid did not occur, and the test was passed. On the other hand, in Comparative Examples 1 and 2 in which L/t < 1.0 and D > 11.0 [mm], leakage of pressure fluid occurred, and the test was failed.

Thus, it was found that in a case where the condition that L/t ≥ 1.0 or the condition that D ≤ 11.0 [mm] is satisfied, even when the gap G of 0.2 mm or more exists between the crest 123 and the root 224, excellent sealing performance can be secured.

### REFERENCE SIGNS LIST

100: Threaded Connection
10: Pin
11: Pin Inner Sealing Surface
12: Male Thread Part
121: Inner Male Thread Part
121a: Perfect Thread Part
122: Outer Male Thread Part
123: Crest
124: Root
13: Pin Intermediate Sealing Surface
20: Box
21: Box Inner Sealing Surface
22: Female Thread Part
221: Inner Female Thread Part
221a: Perfect Thread Part
222: Outer Female Thread Part
223: Crest
224: Root
23: Box Intermediate Sealing Surface
30: Steel Pipe
31: Pipe Body
40: Completely Engaging Region

## Claims

1. A threaded connection of integral type that connects steel pipes together, comprising:
a tubular pin that is provided to be adjacent to a pipe body in one of the steel pipes, and
a tubular box that is provided in the other of the steel pipes and that is to be made-up with the pin;
wherein:
the pin has, on an outer peripheral surface:
a pin inner sealing surface,
a male thread part disposed on the pipe body side with respect to the pin inner sealing surface, the male thread part including an inner male thread part constituted by a tapered thread having a dovetail-shaped cross section, and an outer male thread part which is disposed on the pipe body side with respect to the inner male thread part and which is constituted by a tapered thread having a dovetail-shaped cross section, and
a pin intermediate sealing surface disposed between the inner male thread part and the outer male thread part;
the box has, on an inner peripheral surface:
a box inner sealing surface that corresponds to the pin inner sealing surface, and that comes into contact with the pin inner sealing surface in a made-up state of the pin and the box,
a female thread part that corresponds to the male thread part, the female thread part including an inner female thread part which is constituted by a tapered thread having a dovetail-shaped cross section and which engages with the inner male thread part, and an outer female thread part which is constituted by a tapered thread having a dovetail-shaped cross section and which engages with the outer male thread part, and
a box intermediate sealing surface that corresponds to the pin intermediate sealing surface and that comes into contact with the pin intermediate sealing surface in the made-up state;
in the made-up state, a gap of 0.2 mm or more is formed at least one of:
between a crest of the male thread part and a root of the female thread part; and
between a root of the male thread part and a crest of the female thread part; and
the threaded connection satisfies a condition of (1) or (2) hereunder:
(1) L/t ≥ 1.0, where a length in an axial direction of the threaded connection of a completely engaging region in which a perfect thread part of the inner male thread part and a perfect thread part of the inner female thread part engage together is represented by "L", and a wall thickness of the pipe body is represented by "t"; and
(2) a distance D in the axial direction from a contact position of the pin inner sealing surface with respect to the box inner sealing surface to the inner male thread part is not more than 11.0 mm.

2. The threaded connection according to claim 1, wherein:
the gap is formed between the crest of the male thread part and the root of the female thread part.

3. The threaded connection according to claim 1 or 2, wherein:
in the made-up state, a front end face of the pin faces the box with a space therebetween.
